# EUROPEAN PATENT SPECIFICATION

(11) **EP 3 906 293 B1**
(45) Date of publication and mention of the grant of the patent: **21.06.2023**
(21) Application number: 19835477.1
(22) Date of filing: 25.11.2019
(51) Int. Cl.: C10L 3/08, C01B 3/34, C10L 3/10

(54) **METHOD FOR HYDROGEN ENRICHMENT OF NATURAL GAS IN SUPERCRITICAL WATER**
VERFAHREN ZUR WASSERSTOFFANREICHERUNG VON ERDGAS IN ÜBERKRITISCHEM WASSER
PROCÉDÉ PERMETTANT L'ENRICHISSEMENT DE L'HYDROGÈNE D'UN GAZ NATUREL DANS DE L'EAU SUPERCRITIQUE

(30) Priority: 31.12.2018 IT 201800021556
(43) Date of publication of application: 10.11.2021
(73) Proprietor: Archimede S.r.l., 93100 Caltanissetta (IT)
(72) Inventor: TUMMINELLI, Gianluca, 93100 Caltanissetta (IT); TUZZOLINO, Gaetano, 93100 Caltanissetta (IT); GATTUSO, Calogero, 93100 Caltanissetta (IT); RIZZO, Roberto, 93100 Caltanissetta (IT); SANTORO, Fabio, 93100 Caltanissetta (IT)
(74) Representative: De Bonis, Paolo
(86) International application number: PCT/IB2019/060109
(87) International publication number: WO 2020/141368

(56) References cited:
- WO-A1-00/18681
- WO-A1-96/22941
- WO-A2-2009/126465
- WO-A2-2010/004425
- IT-A1- RM20 060 709
- US-A1- 2007 277 438

## Description

### Field of the invention

Enriched hydromethane or methane, commercially known by the trade mark Hythane^{®} (Hythane Company LLC), is a gaseous mixture of natural gas (or methane) and hydrogen, characterized by a hydrogen content of up to 30 vol%.

Since hydrogen has a calorific value higher than that of methane on a weight basis, the presence thereof in the gaseous mixture - even in a relatively low amount (5 wt% or 30 vol%) - contributes to increasing the calorific value of the mixture.

Consequently, it is possible to develop a higher combustion heat given the same burnt flow, or else, equivalently, a lower flow of fuel is sufficient to develop the same amount of heat.

On a volume basis, methane has a calorific value of 31.6 MJ/Nm³, whereas the calorific value of hydrogen is 10.1 MJ/Nm³. This means that a mixture of methane enriched at 30 vol% would have a mean calorific value of 25.15 MJ/Nm³. Even though this value is lower, per unit volume, than that of methane (-20.4%), it is to be taken into account that for every cubic metre of natural gas entering the process 1.29 cm³ of hydromethane are produced (+29%) at 30 vol% hydrogen; consequently, the final result is a 2.7% increase of the calorific value per unit volume of starting methane.

Among the strong points of hydromethane is the complete compatibility with current technologies applied to internal-combustion engines of various means of transport (controlled-ignition engines fuelled with petrol or liquid propane), with the advantage of faster ignition (thanks to the acceleration of the flame front provided by hydrogen) as well as the advantage of a more complete combustion. Moreover, use of hydromethane is possible in all current industrial and domestic burners, in current boilers, and in already existing distribution networks.

It has been demonstrated that hydromethane is able to cut off emissions of carbon monoxide and nitrogen oxides (NOₓ) by 50%, as compared to natural gas, a reduction more than seven times what would be obtained using pure hydrogen.

A further advantage of hydromethane is that it is able to sequester upstream the carbon dioxide that would be emitted into the atmosphere, burning the fraction of methane "substituted" by the hydrogen. In fact, the addition of hydrogen to methane reduces the total carbon content of the fuel, and consequently a drop in emissions of CO₂ is expected proportional to the fraction of hydrogen introduced.

Since for every cubic metre of methane burnt one cubic metre of carbon dioxide is emitted, the use of hydromethane (at 30 vol% hydrogen) enables emission of 0.7 Nm³ (1.366 kg) of carbon dioxide for every cubic metre of hydromethane.

Finally, the potential immediate availability of the mixture, in so far as it can be produced by simple mixing of methane and hydrogen, and the maturity of the technology reached in the course of the last twenty years or so today render it the simplest and most economically advantageous way to meet the ever more stringent standards on atmospheric emissions.

The motivation that continues to stimulate research on hydromethane, on production technologies, and on exploitation thereof in a wide range of applications is linked to the so-called hydrogen revolution, which is bound to render hydrogen the "cleanest" and most "democratic" energy vector of the decades to come.

However, the most widespread process for the production of hydrogen (approximately two thirds of total production) is currently steam reforming of natural gas or of the so-called virgin naphtha. This is a process that supplies as product an extremely versatile mixture of gases known as "syngas" or "synthesis gas", which occurs through a change of form, or "reforming", of the light hydrocarbon molecules (methane, in the case where natural gas is supplied, or else light liquid hydrocarbons, in the case of the virgin naphtha), which are converted - by reaction with water vapour - into hydrogen and carbon monoxide.

Carbon monoxide, by reacting with water vapour in a subsequent stage, is converted into carbon dioxide and further hydrogen, according to the needs of final application of syngas.

In effect, a "precursor" of hydromethane is the reagent mixture itself of the steam-reforming process, in so far as, without considering the presence of carbon monoxide and carbon dioxide, hydrogen and methane are present therein in variable proportions during the reaction.

The process of steam reforming of natural gas is aimed at the production of syngas (a mixture of hydrogen and carbon monoxide) starting from light hydrocarbons and water vapour. Since the reaction between methane (which is the main constituent of natural gas, in an amount of at least 95 vol%) and water to produce hydrogen and carbon dioxide is globally endothermic, it is necessary to supply heat for it to take place. The two main reactions that occur in the process are the following:

CH₄ + H₂O ⇆ CO + 3H₂ (1)

CO + H₂O ⇆ CO₂ + H₂ (2)

The reaction (1) is the (primary) reforming reaction proper, and is markedly endothermic (+191.7 kJ/mol). It takes place with an increase in the number of moles; consequently, the conversion at equilibrium is favoured by low pressures. However, in steam reforming it is conducted at pressures in the region of some tens of bars in order to facilitate the subsequent operations of separation, reduce the volumes of the apparatuses, and have at outlet a product (hydrogen) that is easier to market.

The reaction (2) is the known water-gas shift reaction, which occurs appreciably around 450°C and is exothermic (-40.4 kJ/mol).

The global reaction is given by the sum of the two independent reactions (1) and (2):

CH₄ + 2H₂O ⇆ CO₂ + 4H₂ (3)

The reaction (3), in the light of what has been described, is globally endothermic (+151.3 kJ/mol) and moreover occurs with an increase in the number of moles (due to the reforming reaction). Consequently, the conversion at equilibrium would be more shifted towards the products if the process is carried out at low pressures. The heat necessary for sustaining steam reforming is typically supplied by burning part of the incoming natural gas.

The steam-reforming process is afflicted by an undesired reaction, namely

CH₄ + CO₂ = CO + H₂ + H₂O + C (4)

The reaction (4) is at the root of depositing of carbon (C) on the inner walls of the pipes of the plant that implements the process, with consequent reduction in the heat-exchange efficiency and reduction in the activity of the catalyst used for facilitating the reforming reactions (this is an iron-based or nickel-based catalyst on a substrate of alumina or calcium aluminate activated with titanium). In addition to this, since the reaction (4) is endothermic (+107.7 kJ/mol), it subtracts heat that would otherwise be useful to the desired reaction, i.e., the reaction (1). To limit the effects of the reaction (4) the steam-reforming process is typically carried out with excess water vapour (in a ratio of approximately 4:1 with respect to the natural gas).

In the light of the circumstances detailed above, it is evident how the steam-reforming process is, however, likely to require a considerable energy intake from the external (natural gas, water) network and likewise requires complex and costly plant structures and infrastructures according to the operating conditions in which it takes place. Not least, the steam-reforming process results in the production of syngas for further uses so that further reaction stages are required to obtain a gas that can be classified as hydromethane.

WO 2009/126465 A discloses a method of generating hydrogen-enriched fuel gas and carbon dioxide comprising: (a) converting hydrocarbon molecules from a gaseous hydrocarbon feed stream into hydrogen and carbon dioxide; (b) separating the hydrogen and carbon dioxide; (c) blending the hydrogen back into the gaseous hydrocarbon feed stream to generate a hydrogen-enriched fuel gas; and (d) utilizing the carbon dioxide for storage or sequestration.

WO 2010/004425 A discloses a process comprising: (a) receiving a gas stream comprising primarily methane; (b) removing a first portion of the gas stream from a second portion of the gas stream; (c) converting the first portion of the gas stream to produce a reformed and water-gas shifted gas comprising primarily carbon dioxide and molecular hydrogen; (d) removing, from the reformed and water-gas shifted gas, at least most of the carbon dioxide to form a product gas; and (e) thereafter combining the product gas with the second portion of the gas stream to form a mixed gas, whereby a carbon content of the mixed gas is reduced relative to the received gas stream.

US 2007/277438 A discloses a method for producing a hydrogen enriched alternative fuel comprising: reacting steam and a hydrocarbon to produce an impure hydrogen-rich gas stream comprising hydrogen and impurities in selected quantities; and blending the impure hydrogen-rich gas stream with a hydrocarbon fuel at a predefined ratio of impure hydrogen-rich gas stream to hydrocarbon fuel.

### Object of the invention

The object of the invention is to solve the technical problems mentioned previously. In particular, the object of the invention is to provide a method for enrichment of natural gas that substantially will not require any further energy intake from supply networks outside of the natural gas itself, and that will result in the production of hydromethane gas with negligible harmful emissions into the atmosphere.

### Summary of the invention

The object of the invention is achieved by a method having the characteristics that form the subject of the ensuing claims, which constitute an integral part of the technical teaching provided herein in relation to the invention.

### Brief description of the drawings

The invention will now be described with reference to the annexed_drawings, which are provided purely by way of non-limiting example and in which:
- Figure 1 is a schematic representation of the method according to the invention;
- Figure 2 is a schematic representation of an enrichment plant configured for implementing the enrichment method according to the invention; and
- Figures 3A to 3D illustrate respective alternative embodiments of a reactor of the plant of Figure 1.

### Detailed description

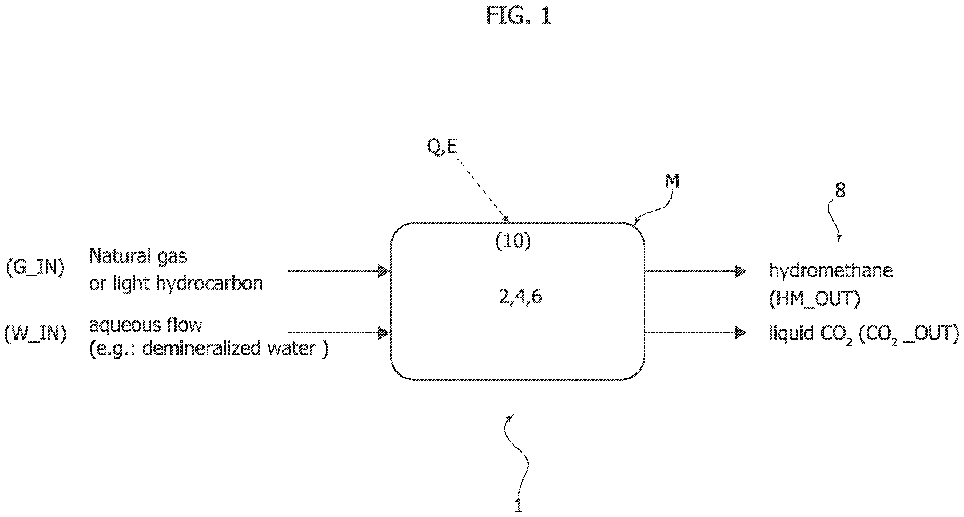

With reference to Figure 1, the letter M denotes as a whole a block corresponding to a method of enrichment, in particular of hydrogen enrichment, of natural gas, according to the invention.

In various embodiments, the method of hydrogen enrichment of natural gas, comprises:
- feeding a natural gas flow G_IN, in particular natural gas;
- feeding an aqueous flow W_IN;
- mixing the natural gas flow G_IN with the aqueous flow W_IN;
- thermally conditioning (heat flows Q, E) a mixed flow, which comprises said natural gas flow and said aqueous flow, until reaching supercritical conditions;
- initiating a reforming reaction of the mixed flow in supercritical conditions; and
- separating, in the reforming reaction product, the enriched natural gas from an aqueous fraction and from a carbon-dioxide fraction.

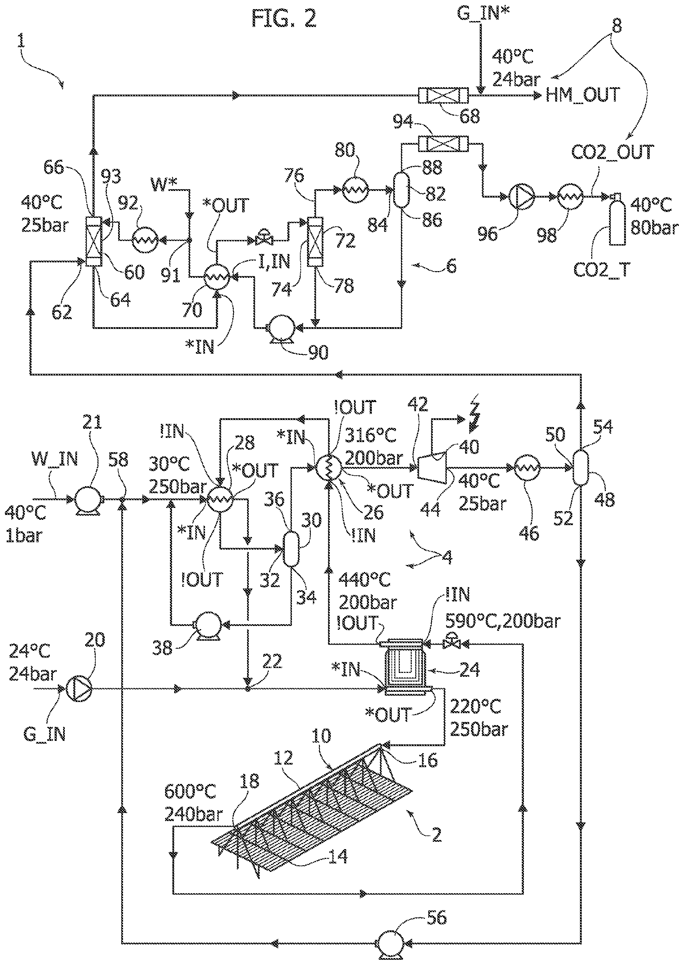

In a preferred embodiment, the method according to the invention is implemented by means of an enrichment plant represented in Figure 2, based upon a solar reactor, in particular, a solar-concentrator device, which will now be described in detail from the circuit and operating standpoint.

The reference number 1 in Figure 2 designates as a whole an enrichment plant configured for implementing the enrichment method according to the invention.

The plant 1 comprises an enrichment section 2, an energy-conversion section 4, a post-treatment section 6, and a product-collection section 8. The same reference numbers appear also in the diagram of Figure 1 for reference.

The enrichment section 2 comprises, with the function of solar reactor, a solar-concentrator device 10, which includes a receiver/reactor duct 12 and a reflector device 14. In the preferred embodiment illustrated herein, the solar-concentrator device 10 is a Fresnel-mirror solar concentrator so that the reflector device 14 comprises an array of Fresnel mirrors that identify a focus of reflection, where the receiver/reactor duct 12 is located. The receiver/reactor duct 12 operates as a solar-energy conversion reactor of a PFR (Plug-Flow Reactor) type, and is preferably built according to what is described in the Italian patent application for industrial invention No. 102017000109097.

The receiver duct 12 comprises an inlet port 16 and an outlet port 18. The inlet port 16 is configured for being supplied by means of a mixture of natural gas and demineralized water.

The flow of natural gas G_IN and the flow of demineralized water W_IN are fed, respectively, via a compressor 20 and a high-pressure pump 21. It is, however, to be borne in mind that the flow of demineralized water effectively circulating in the plant 1 does not correspond to an identical demand for flow W_IN. In fact, once the pump 21 has supplied the plant 1 with the amount of water necessary for initiating and sustaining the enrichment reactions, the consumption of demineralized water is minimal or negligible so that the pump 21 processes a flow of demineralized water W_IN that is simply aimed at reintegrating the water consumed.

The flow of demineralized water and natural gas are mixed together at a mixing node 22. From here, the biphasic current of demineralized water and natural gas is sent on to a first thermal-conditioning process obtained by means of a thermal-energy accumulator (or thermal battery) 24. The thermal battery 24 is preferably obtained according to what is described in the Italian patent application for industrial invention No. 102017000091905.

The thermal battery 24 comprises a discharging section having an inlet port *IN and an outlet port *OUT, and a charging section having an inlet port !IN and an outlet port !OUT. This notation is used throughout the diagram of Figure 2 for each component that envisages thermal interaction between two fluids, a "hot" one and a "cold" one. The asterisk (*) is associated to the cold fluid, whereas the exclamation mark (!) is associated to the hot fluid, so that the notations *IN, *OUT denote, respectively, an inlet port for cold fluid and an outlet port for cold fluid, whereas the notations !IN and !OUT denote, respectively, an inlet port for hot fluid and an outlet port for hot fluid. It is to be borne in mind that the definitions of "hot" and "cold" used for attribution of the notation refer to the characteristics of temperature of the fluid at the point of its entry into the heat exchanger, and not downstream of the thermal interaction with the other fluid.

The discharging section is designed to be traversed by a thermovector fluid at a temperature lower than that of the thermovector fluid that flows in the charging section, and in particular the discharging section is designed to absorb a thermal flow from a thermal-accumulation matrix of the thermal battery itself. The matrix is in turn impinged upon by a flow of heat coming from the fluid that flows in the charging section.

The flow of natural gas and demineralized water mixed in the node 22 is sent on to the port *IN of the thermal battery 24 and exits, heated, from the port *OUT to be sent on to the port 16.

The port 18 is in turn in fluid communication with the port !IN of the thermal battery 24, whereas the port !OUT is in fluid communication with an inlet port !IN of a first heat exchanger 26. A port *OUT of the latter is in fluid connection with a port !IN of a second heat exchanger 28. A port !OUT of the latter is in fluid connection with a high-pressure separator 30, in particular an inlet port 32 thereof. The high-pressure separator 30 comprises an outlet port 34 for the liquid fraction and an outlet port 36 for the gaseous (or biphasic) fraction of the mixture. The outlet port 34 is in fluid communication with the intake port of a recirculation pump 38, the delivery port of which is connected to a port *IN of the heat exchanger 28. The port *OUT of the latter is in fluid communication with the node 22.

The port 36 of the separator 30 is, instead, in fluid communication with the port *IN of the heat exchanger 26, the port *OUT of which is connected to a turbogenerator 40 (which defines the energy-conversion section 4; in general, the flow is sent to an expander connected to an electric-power generator), in particular to an intake port 42 thereof. A discharge port 44 of the turbogenerator 40 is connected to the inlet of a third (optional) heat exchanger 46, the outlet of which is connected to a medium-pressure separator 48, in particular to an inlet port 50 thereof.

The separator 48 further comprises an outlet port for the liquid fraction 52 and an outlet port for the gaseous (or biphasic) fraction 54. The port 52 is in fluid communication with the intake port of a recirculation pump 56, the delivery port of which is in fluid communication with a circuit node 58 immediately downstream of the delivery port of the pump 21.

The port 54 gives out into the post-treatment section 6 and is, in particular, in fluid communication with a medium-pressure adsorber 60 (absorption column), in particular with an inlet port 62 thereof. The adsorber 60 further comprises a first outlet port 64 and a second outlet port 66, where the port 64 is configured for disposal of the so-called bottom product of the adsorber 60, whereas the port 66 is configured for disposal of the so-called top product of the adsorber 60 and is in fluid communication with a first bed of adsorbent material 68, preferably of the silica-gel type, necessary for dehydrating the current. Once the bed of adsorbent material 68 has been traversed, an outlet port HM_OUT of the plant 1 that defines part of the product-collection section 8 opens.

The port 64 is in fluid communication with a port *IN of a heat exchanger 70, the outlet port *OUT of which is in fluid communication with an atmospheric desorber 72 (desorption column), in particular with a first inlet port 74 thereof. The desorber 72 comprises a first outlet port 76 and a second, further, outlet port 78.

The outlet port 76 is once again configured for disposal of the top product of the desorber 72, which, through a heater 80, is sent on to an atmospheric separator 82, in particular an intake port 84 thereof. The separator 82 has two outlet ports, in particular an outlet port for the liquid fraction 86 and an outlet port for the gaseous (or biphasic) fraction 88. The port 86 is in fluid communication with the intake port of a recirculation pump 90, the delivery port of which is connected to a port !IN of the heat exchanger 70. The port !OUT of the heat exchanger 70 is in turn connected to a cooler 92, which is in turn connected to the top of the adsorber 60 (inlet port 93). Between the port !OUT of the heat exchanger 70 and the port !IN of the cooler 92, at a circuit node 91, it is possible to integrate a flow W* of absorbent solution, i.e., demineralized water, to compensate the leakages of water entrained by the currents coming out of the port 66 of the adsorber 60 and the port 88 of the atmospheric separator 82.

The port 88 is, instead, connected to the inlet of a second bed of adsorbent material 94, which is also preferably of the silica-gel type, configured to dehydrate the fluid current that traverses it. Connected to the outlet of the bed of adsorbent material 94 is a compressor 96 followed by a refrigerator 98, via which the corresponding flow (CO₂) is sent on - through a discharge CO2_OUT and in liquid phase - to collection tanks CO2_T. The discharge CO2_OUT defines, with the outlet HM_OUT, the product-collection section 8.

Operation of the plant 1 and of the enrichment method according to the invention, is described in what follows.

As preliminary note, the method according to the invention envisages conducting the same reactions as those typical of steam reforming (1) and (2) in a reaction environment constituted by supercritical water (T > 374°C, P > 221 bar). The method, however, differs from the traditional steam-reforming method for at least the following aspects:
a) product of reaction: whereas in steam reforming the aim is to produce syngas useful for producing innumerable other reaction intermediates and finished products, in the method according to the invention the product of reaction is hydrogen-enriched natural gas (hydromethane), which is collected through the outlet HM_OUT;
b) absence of catalyst: the method according to the invention does not necessarily envisage the presence of a catalyst, unlike traditional steam reforming, with consequent greater simplicity of running and maintenance; sizing of the components of the plant, aimed at guaranteeing temperatures and times of stay of the fluid flows necessary for reaching the desired level of hydrogen enrichment, together with the extraordinary qualities of the supercritical water that participates as reagent, compensate for the absence of catalyst;
c) operating temperature: whereas, in steam reforming, operation is at temperatures of between 800°C and 1100°C, usually reached in ovens and necessary for having an acceptable conversion of methane in conditions of equilibrium (hence compensating for the decrease in conversion at equilibrium that would be caused by the high operating pressure), the method according to the invention envisages operation at maximum temperatures of not higher than 700-750°C;
d) operating pressure: in the method according to the invention the operating pressure is necessarily higher than the critical pressure of water (221 bar) in so far as there has to be ensured a work point (P, T) lying in the supercritical region of the phase diagram of water; the pressure operating conditions of the method according to the invention are hence approximately 250 bar, which corresponds to a pressure threshold necessary also for compensating for the head losses that take place within the receiver/reactor 12 and within the apparatuses downstream thereof;
e) water phase: in steam reforming, the water reacts in the vapour phase, whereas the operating conditions of the method according to the invention are such that the water is in the supercritical fluid phase, with chemico-physical and transport properties intermediate between those of the liquid phase and those of the gaseous phase, amongst which an exceptional solvent property in regard to organic compounds and, on the other hand, a low solubility of ion compounds; another advantage of operation in supercritical water is the suppression of carbon monoxide as product of reaction;
f) primary energy source: whereas in conventional steam reforming the primary energy for the process is supplied by combustion of a part of incoming natural gas, the method according to the invention envisages a direct and exclusive solar-energy supply, which hence renders it eco-compatible and renewable; the final object of the method is to increase the calorific value of the gas G_IN at inlet (natural gas), converting a part of methane into hydrogen at the expense of solar energy; in other words, the method according to the invention enables high-efficiency conversion of the solar energy into chemical energy and storage thereof in the form of increase of the calorific value of the natural gas at inlet.

The plant 1 draws, from the network, the flow of natural gas G_IN (here by way of example at a pressure of 24 bar and a temperature of 24°C) and the flow of demineralized water W IN. The latter is drawn from the network in full measure with respect to the requirements of the plant 1 only at the start, given that, during regular operation, the aqueous flow that circulates in the plant 1 is mostly recirculation flow. Both in the case where the pump 21 operates purely as re-integration pump, namely, during normal running in steady-state conditions of the plant and in the case of starting thereof, the use of demineralized water is aimed at reducing or preventing the problems of soiling, encrustation, and precipitation of insoluble compounds within the pipes and the receiver/reactor 12.

The flow of natural gas G_IN and the flow of demineralized water W_IN (new flow and/or recirculation flow) are sent on to the node 22 via the compressor 20 and the high-pressure pump 21, respectively. Both of these are sized and regulated so as to pressurize the two flows at one and the same pressure level (here, by way of example, 250 bar). The compressor 20 is preferably a volumetric compressor equipped with filtering and cooling system.

From the node 22 the biphasic current of demineralized water and natural gas (typically in the proportions of 70% aqueous flow and 30% gaseous flow) is sent on for a first thermal conditioning provided by means of the thermal battery 24. The thermal battery 24 is preferably sized in such a way as to pre-heat the biphasic flow that exits through the port *OUT to a temperature value of around 200-250°C prior to entry into the port 16 (in the case of the plant 1, by way of example, the temperature at outlet from the thermal battery 24 is 220°C). The biphasic mixture does not undergo significant alterations of pressure during pre-heating.

The solar-concentrator device 10 receives the biphasic flow mixed inside the receiver/reactor device 12 (port 16), and is configured for thermally conditioning the mixed flow until supercritical conditions of the latter are reached. Thermal conditioning takes place via radiation of the solar-concentrator device by solar radiation.

The device 10 is sized in such a way that the number of reflecting elements and the length of the solar-receiver/reactor duct 12 (in which the flow regime is of a plug-flow type) are such as to define, for a given supply flow, the presence of:
i) an area of pre-heating of the biphasic current fed, the dimensions of which are established in such a way as to enable reaching of a temperature higher than 600°C, and preferably higher than 700°C, necessary to trigger the reforming reactions in supercritical water; and
ii)a reaction area, in which the reforming reaction (3) proper occurs, with production of hydrogen and consumption of methane, the extension of which is sized in such a way as to enable reaching of a hydrogen/methane volumetric ratio at outlet at least equal to 1:2.333 in the worst conditions of radiation, and simultaneously - considering that owing to the endothermy of the reaction, the temperature tends to decrease along the reactor 12 - in such a way as to have a temperature at outlet from the port 18 sufficiently low that it is possible to assume the speed of reaction as being practically zero.

Moreover contemplated is the possibility of sending part of the natural gas G_IN, designated in Figure 1 by G_IN*, directly to mixing with the current of hydromethane HM_OUT produced downstream of the plant 1 in such a way as to compensate for the randomness of solar radiation that impinges upon the receiver 12 (direct and reflected radiation) in the course of the year. In fact, in days of least radiation, with fixed time of stay in the reactor 12, the plant 1 is preferably sized for producing 30 vol% hydromethane, whereas in days when the radiation is higher, the excess hydrogen produced given the same stay time is compensated via mixing with a certain amount of "fresh" natural gas. The immediate consequence of this is an increase of the volumes of hydromethane produced.

The flow of enriched natural gas (or hydromethane) and supercritical water exiting from the port 18 is sent to the port !IN of the thermal battery 24, functioning as thermovector fluid for charging the thermal battery itself. The physical conditions of the biphasic current of supercritical water and enriched natural gas exiting from the port 18 correspond - in the example here considered - to a pressure of 240 bar and a temperature of 600°C, whereas the conditions at the inlet !IN of the thermal battery 24 correspond - in the example here considered - to 590°C and 200 bar.

At the outlet !OUT of the thermal battery 24, the biphasic flow is in conditions that reflect the transfer of heat to the thermal-storage matrix of the thermal battery itself: 440°C and 200 bar. The thermal energy stored in the thermal battery 24 constitutes in effect a recovery of the energy at discharge of the concentrator device 10, which is used for pre-heating the sub-critical flow at inlet to the receiver 12 through the port 16.

From the port !OUT of the thermal battery 24 the biphasic flow is sent on to the port !IN of the heat exchanger 26 and then exits from the port !OUT thereof. From this, the flow is sent on to the port !IN of the heat exchanger 28, where it exchanges (yields) heat with (to) the aqueous flow entering the node 22, which is thus pre-heated. The biphasic flow exiting from the port !OUT of the heat exchanger 28 reaches the port 32 of the high-pressure separator 30, where a first aqueous fraction is isolated and discharged through the port 34, and sent on to the recirculation pump 38 and therefrom to the port *IN of the heat exchanger 28, mixing with the flow processed by the pump 21 and by the pump 56.

A gaseous (or biphasic) fraction (net of the liquid already extracted through the port 34) of water and enriched natural gas (hydromethane) is then sent on through the port 36 to the port *IN of the heat exchanger 26, from which it exits heated - port *OUT - to be sent on to the intake 42 of the turbogenerator 40. Via the latter the pressure of the biphasic flow is reduced from 200 bar to 25 bar (in this example), and the temperature drops from 316°C to 240°C. At the same time, there is a conversion into electrical energy, which is ready for introduction into the grid.

From the port 44, the biphasic flow goes on to the refrigerator 46 and from there enters the medium-pressure separator 48. A second aqueous liquid fraction is separated and disposed of through the port 52, from which it is sent on to the intake of the recirculation pump 56 and from this to the node 58. A second gaseous (or biphasic) fraction purged of the first and second aqueous fractions (which are a combination of the high-pressure separation and the present medium-pressure separation) is sent on - through the port 54 - to the post-treatment section 6, and in particular to the inlet 62 of the adsorber 60.

The adsorber 60 is preferably provided as an absorption column with an aqueous solution of monoethanolamine i.e., a mixture of ethanolamine, according to technologies that are widely known and widespread in the chemical industry, in order to absorb the carbon dioxide present in the hydromethane.

The bottom product of the absorption column 60 is overheated in the heat exchanger 70 (preferably supplied with solar energy) and sent on to the desorber 72, which is provided as desorption (or stripping) column operating at atmospheric pressure.

The desorption column 72 is equipped with a bottom reboiler (not shown for simplicity in the plant diagram), which provides the heat necessary to favour stripping of the carbon dioxide from the hydromethane and regeneration of the absorbent solution of ethanolamine. For this purpose, the separator 82 isolates and disposes of the absorbent solution through the port 86, from which the absorbent solution is recirculated to the adsorber 66 through the port 93. A small re-integration of water W* is necessary to compensate for leakages thereof in the top currents of the column 60 and of the atmospheric separator 82.

The port 88 disposes, instead, of the carbon dioxide extracted from the hydromethane, de-humidifying it in the bed 94 and capturing it in the tanks CO2_T. The carbon dioxide is compressed to approximately 80 bar via the compressor 96 and is cooled down to room temperature by means of the refrigerator 98, causing condensation thereof necessary for storage in the tanks CO2_T and subsequent sale.

The top product of the absorption column 60 is the hydromethane (exiting from the port 66), pressurized and still "wet": it is passed through the bed 68 for removal of the water vapour. At outlet from the bed 68, the hydromethane is now ready for being introduced into the distribution network through the product-collection section 8 (port HM_OUT), having a composition suitable for reintroduction (approximately 70% methane, approximately 30% hydrogen, possible other gases, such as nitrogen or higher alkanes, in an amount compatible with the composition of the incoming natural gas).

The method according to the invention hence enables production of hydrogen-enriched methane through a technology based upon supercritical water and solar energy as sole energy source.

In particular, the advantages of the process may be summed up as follows:
a) total energy independence from fossil sources: the supply of energy required by the process is provided exclusively by solar energy, fully exploited also for storing the excess heat and producing the electrical energy necessary for operation of the plant (turbogenerator 40 in the energy-conversion section 4) ;
b) conversion of the solar energy into chemical energy and storage thereof, in the form of increase of the calorific value of the natural gas already distributed in urban networks for domestic, industrial, and transportation purposes;
c) high enrichment yields, with production of 30 vol% hydromethane and of up to 1.30 Sm³ of hydrogen for every standard cubic metre of incoming natural gas;
d) capture and production of liquid carbon dioxide with a degree of purity of up to 4.0; and
e) abatement by 30% of the last emissions of carbon dioxide, due to the production of a fuel (hydromethane) with a C-H ratio lower than that of natural gas.

Of course, the details of construction and the embodiments may vary widely with respect to what has been described and illustrated herein, without thereby departing from the scope of the present invention, as defined by the annexed claims.

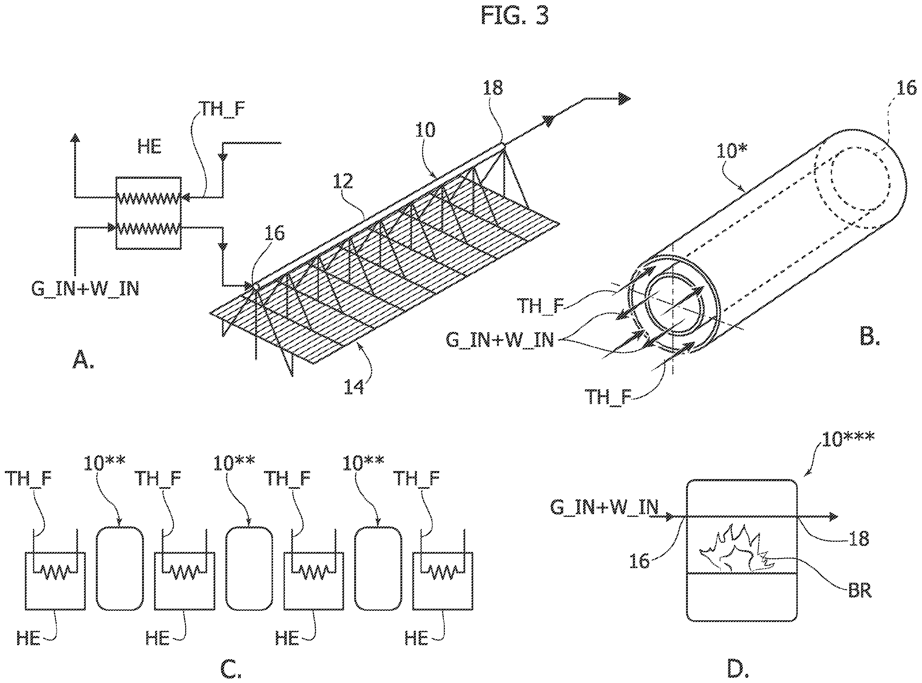

With reference to Figures 3A-3D, in alternative embodiments, the reactor 10 that can be used in the plant 1 may be of a type different from the solar reactor 10, or else may envisage the combination of a number of different technologies. In particular, it is possible, in alternative embodiments, to use an energy intake other than solar energy for thermal conditioning of the flow of natural gas G_IN mixed with the aqueous flow W_IN, or to use a combined energy intake from solar energy and from some other energy source. Figure 3A illustrates an embodiment in which the solar reactor 10 is connected in series to a pre-heater (heat exchanger) HE in which there flow, preferably in countercurrent, the combined flow G IN+W IN and a flow of thermovector fluid TH F for thermal conditioning (heating in this case) of the combined (mixed) flow G_IN+W_IN. The pre-heater HE enables use of the solar concentrator 10 as pure solar reactor: the location of the receiver duct 12, which, in the diagram of Figure 1, is used as pre-heating area upstream of the reaction area, is in this case shifted downstream of the pre-heater HE. This enables exploitation of the entire length of the receiver device 12 for housing the reforming reaction (and the corresponding energy intake from solar radiation), while the pre-heater HE operates at the expense, in energy terms, of a thermovector fluid that may be constituted, for example, by combustion fumes of a flow of natural gas drawn off as fraction of the flow G_IN.

In the case of the embodiment of Figure 3B, the reference 10* designates a reactor that is designed to replace the solar-concentrator device 10 as reactor of the plant 1. The reactor 10* is a double-walled reactor comprising an internal reaction volume, flowing in which is the combined flow G_IN+W_IN, and a jacket that surrounds the internal reaction volume, flowing in which is the thermovector fluid TH_F flows, the nature and origin of which may be the same as what has already been described for the embodiment of Figure 3A. The reactor 10* renders the plant 1 in principle independent of intake of solar energy. The flow of thermovector fluid TH_F, unlike the case of Figure 3A, must be increased given the same combined flow G_IN+W_IN since the thermovector fluid TH_F must transfer an amount of energy sufficient to bring the flow G_IN+W_IN into supercritical conditions and initiate the reforming reaction. Figure 3B hence illustrates a so-called internally heated reactor.

With reference to Figure 3C, the reference 10** designates a solar reactor similar to the concentrator device of Figures 1 and 3A, set in series to a heat exchanger HE. Figure 3C illustrates in particular a modular connection of units HE-10**, in which each heat exchanger HE operates as pre-heating element, and each reactor 10** operates as adiabatic reactor.

Since the gasification reactions that take place in each reactor 10** are globally endothermic, they require heat absorption to develop, and moreover the reagent-product conversion at equilibrium is further shifted towards the products, the higher the temperature. Operatively, it is much simpler to provide and manage adiabatic reactors rather than isothermic reactors, both in the case of endothermic reactions and in the case of exothermic reactions. In the latter case, there exists the widespread practice of providing successive reactive stages interspersed with cooling stages (in order to increase conversion at equilibrium).

In the case of the invention, since we have to do with endothermic reactions, we require, instead, multistage preheating/overheating in order to introduce the energy necessary for the reactions and compensate for the drop in temperature of the reagent mixture due to the evolution itself of the reactions.

Nothing rules out the fact (indeed, it is extremely likely) that the reactions will start already within the heat exchanger/exchangers HE that precedes/precede the purely reactive stages 10**. The choice of operating in this way could justify the use of an adiabatic piping that already exists (for example, the receiver 12 itself in the absence of solar radiation), but is unusable or unsuitable or not pre-arranged for functioning simultaneously also as pre-heater: in this case, it is sufficient to set in front of the portion of piping to be used as reaction area one or more pre-heaters HE, as described. The higher the overheating provided by each "external" pre-heater HE, the lower the number required, given the same total length of the plant and respecting all the thermomechanical constraints of the case in point.

Finally, with reference to Figure 3D, the reference 10*** designates a different type of reactor, this time a combustion reactor. The reactor 10*** incorporates a burner BR, which, at the cost of consumption of natural gas drawn off from the flow G_IN or of the combustion of a renewable fuel, alone thermally conditions the flow G_IN+W_IN that travels in the reactor 10***. In all of Figures 3A-3D the reference numbers 16, 18 are used with the same meaning as they had in relation to the plant 1.

## Claims

1. A method for hydrogen enrichment of natural gas, comprising the steps of:
- feeding natural gas (G_IN);
- feeding an aqueous flow (W_IN);
- mixing said flow of natural gas (G_IN) with said aqueous flow (W_IN),
- thermally conditioning (10; 10*; 10**; 10***; HE, TH_F; BR) the mixed flow, which comprises said flow of natural gas (G_IN) and said aqueous flow (W_IN), until reaching supercritical conditions;
- initiating a reforming reaction of the mixed flow in supercritical conditions; and
- separating, in the reforming-reaction product reaction, the enriched natural gas from an aqueous fraction and from a carbon-dioxide fraction.

2. The method according to Claim 1, wherein said reforming reaction takes place within a solar reactor (10), in particular a solar-concentrator device, and wherein said step of thermal conditioning of comprises radiating said solar reactor (10) by means of solar radiation.

3. The method according to Claim 1, wherein said feeding the natural gas flow comprises pressurizing said flow of natural gas (G_IN), and wherein said step of feeding the aqueous flow comprises pressurizing said aqueous flow (W_IN), preferably pressurizing it to the same pressure as the flow of natural gas (G_IN).

4. The method according to Claim 2 or Claim 3, wherein said mixed flow is pre-heated prior to the entry thereof into a solar reactor (10), preferably a receiver duct (12) of a solar-concentrator device (10), by means of a thermal-energy accumulation device (24).

5. The method according to Claim 4, wherein the product of the reforming reaction is sent on to said thermal-energy accumulation device (24) as charging fluid.

6. The method according to Claim 1, or Claim 2, or Claim 5, further comprising sending the product of the reforming reaction to a first separator (30) for disposal of a first aqueous fraction.

7. The method according to Claim 6, further comprising sending the product of the reforming reaction, purged from said first aqueous fraction, to an expander (40) connected to a power generator.

8. The method according to Claim 7, further comprising sending the product of the reforming reaction purged from said first aqueous fraction to a second separator (48) for disposal of a second aqueous fraction following said sending the product of the reforming reaction, purged from said first aqueous fraction, to said expander (40).

9. The method according to Claim 8, further comprising sending the product of the reforming reaction, purged from said first aqueous fraction and from said second aqueous fraction, to an adsorber device (60) configured for disposal of carbon dioxide present in said product of the reforming reaction.

10. The method according to Claim 9, further comprising pressurizing (96) the carbon dioxide disposed of by means of said adsorber device (60) and capturing it in one or more tanks (CO2_T).

11. The method according to Claim 1 or Claim 2, wherein said thermally conditioning the mixed flow and said reforming reaction take place within a solar reactor (10), in particular within a receiver duct (12) of a solar-concentrator device (10).

12. The method according to Claim 1, wherein said thermally conditioning the mixed flow takes place in a pre-heating device (HE, TH_F; BR) prior to entry of the mixed flow into a reactor (10*, 10**; 10***), and wherein said reforming reaction takes place within said reactor (10*, 10**; 10***).

## Patentansprüche

1. Verfahren zur Wasserstoffanreicherung von Erdgas, umfassend die Schritte:
- Einspeisen von Erdgas (G_IN);
- Einspeisen eines wässrigen Flusses (W_IN);
- Mischen des Flusses von Erdgas (G_IN) mit dem wässrigen Fluss (W_IN),
- thermisches Konditionieren (10; 10*; 10**; 10***; HE, TH_F; BR) des gemischten Flusses, der den Fluss des Erdgases (G_IN) und den wässrigen Fluss (W_IN) umfasst, bis überkritische Bedingungen erreicht sind;
- Initiieren einer Reformierreaktion des gemischten Flusses unter überkritischen Bedingungen; und
- Trennen des angereicherten Erdgases von einer wässrigen Fraktion und von einer Kohlendioxidfraktion in der Reformierreaktionsproduktreaktion.

2. Verfahren nach Anspruch 1, wobei die Reformierreaktion innerhalb eines Solarreaktors (10) stattfindet, insbesondere einer Solarkonzentratorvorrichtung, und wobei der Schritt des thermischen Konditionierens Bestrahlen des Solarreaktors (10) mittels solarer Strahlung umfasst.

3. Verfahren nach Anspruch 1, wobei das Einspeisen des Erdgasflusses Druckbeaufschlagen des Flusses des Erdgases (G_IN) umfasst, und wobei der Schritt des Einspeisens des wässrigen Flusses Druckbeaufschlagen des wässrigen Flusses (W_IN) umfasst, wobei er vorzugsweise auf den gleichen Druck wie der Fluss des Erdgases (G_IN) druckbeaufschlagt wird.

4. Verfahren nach Anspruch 2 oder Anspruch 3, wobei der gemischte Fluss mittels einer Wärmeenergieakkumulationsvorrichtung (24) vor dem Eintreten desselben in einen Solarreaktor (10) vorgeheizt wird, vorzugsweise in einem Empfängerkanal (12) einer Solarkonzentratorvorrichtung (10).

5. Verfahren nach Anspruch 4, wobei das Produkt der Reformierreaktion als Ladefluid zu der Wärmeenergieakkumulationsvorrichtung (24) weitergesendet wird.

6. Verfahren nach Anspruch 1 oder Anspruch 2 oder Anspruch 5, des Weiteren umfassend Senden des Produkts der Reformierreaktion zu einem ersten Separator (30) zur Entsorgung einer ersten wässrigen Fraktion.

7. Verfahren nach Anspruch 6, des Weiteren umfassend Senden des Produkts der Reformierreaktion, gesäubert von der ersten wässrigen Fraktion, zu einem Expander (40), der mit einem Leistungsgenerator verbunden ist.

8. Verfahren nach Anspruch 7, des Weiteren umfassend Senden des Produkts der Reformierreaktion, gesäubert von der ersten wässrigen Fraktion, zu einem zweiten Separator (48) zur Entsorgung einer zweiten wässrigen Fraktion nach dem Senden des Produkts der Reformierreaktion, gesäubert von der ersten wässrigen Fraktion, zu dem Expander (40).

9. Verfahren nach Anspruch 8, des Weiteren umfassend Senden des Produkts der Reformierreaktion, gesäubert von der ersten wässrigen Fraktion und von der zweiten wässrigen Fraktion, zu einer Adsorbervorrichtung (60), die zur Entsorgung von Kohlendioxid ausgestaltet ist, das in dem Produkt der Reformierreaktion vorhanden ist.

10. Verfahren nach Anspruch 9, des Weiteren umfassend Druckbeaufschlagen (96) des mittels der Adsorbervorrichtung (60) entsorgten Kohlendioxids und Einfangen desselben in einem oder mehreren Tanks (CO2_T).

11. Verfahren nach Anspruch 1 oder Anspruch 2, wobei das thermische Konditionieren des gemischten Flusses und die Reformierreaktion innerhalb eines Solarreaktors (10) stattfinden, insbesondere innerhalb eines Empfängerkanals (12) einer Solarkonzentratorvorrichtung (10).

12. Verfahren nach Anspruch 1, wobei das thermische Konditionieren des gemischten Flusses in einer Vorheizvorrichtung (HE, TH_F; BR) vor dem Eintreten des gemischten Flusses in einen Reaktor (10*, 10**; 10***) stattfindet, und wobei die Reformierreaktion innerhalb des Reaktors (10*, 10**; 10***) stattfindet.

## Revendications

1. Procédé d'enrichissement en hydrogène de gaz naturel, comprenant les étapes de :
- alimentation en gaz naturel (G_IN) ;
- alimentation en flux aqueux (W_IN) ;
- mélange dudit flux de gaz naturel (G_IN) avec ledit flux aqueux (W_IN),
- conditionnement thermique (10 ; 10* ; 10** ; 10*** ; HE, TH_F ; BR) du flux mixte, qui comprend ledit flux de gaz naturel (G_IN) et ledit flux aqueux (W_IN), jusqu'à atteindre des conditions supercritiques ;
- initiation d'une réaction de reformage du flux mixte dans des conditions supercritiques ; et
- séparation, dans le produit de réaction de reformage, du gaz naturel enrichi d'une fraction aqueuse et d'une fraction de dioxyde de carbone.

2. Procédé selon la revendication 1, dans lequel ladite réaction de reformage a lieu dans un réacteur solaire (10), en particulier un dispositif concentrateur solaire, et où ladite étape de conditionnement thermique comprend l'irradiation dudit réacteur solaire (10) au moyen d'un rayonnement solaire.

3. Procédé selon la revendication 1, dans lequel ladite alimentation en flux de gaz naturel comprend la mise sous pression dudit flux de gaz naturel (G_IN), et dans lequel ladite étape d'alimentation en flux aqueux comprend la mise sous pression dudit flux aqueux (W_IN), de préférence sa mise sous pression à la même pression que le flux de gaz naturel (G_IN).

4. Procédé selon la revendication 2 ou 3, dans lequel ledit flux mixte est préchauffé avant son entrée dans un réacteur solaire (10), de préférence un conduit récepteur (12) d'un dispositif concentrateur solaire (10), au moyen d'un dispositif d'accumulation d'énergie thermique (24).

5. Procédé selon la revendication 4, dans lequel le produit de la réaction de reformage est envoyé vers ledit dispositif d'accumulation d'énergie thermique (24) en tant que fluide de charge.

6. Procédé selon la revendication 1, ou 2, ou 5, comprenant en outre l'envoi du produit de la réaction de reformage vers un premier séparateur (30) pour l'élimination d'une première fraction aqueuse.

7. Procédé selon la revendication 6, comprenant en outre l'envoi du produit de la réaction de reformage, purgé de ladite première fraction aqueuse, vers un détendeur (40) relié à un générateur de puissance.

8. Procédé selon la revendication 7, comprenant en outre l'envoi du produit de la réaction de reformage purgé de ladite première fraction aqueuse vers un deuxième séparateur (48) pour l'élimination d'une deuxième fraction aqueuse après ledit envoi du produit de la réaction de reformage, purgé de ladite première fraction aqueuse, vers ledit détendeur (40).

9. Procédé selon la revendication 8, comprenant en outre l'envoi du produit de la réaction de reformage, purgé de ladite première fraction aqueuse et de ladite deuxième fraction aqueuse, vers un dispositif d'adsorption (60) configuré pour l'élimination du dioxyde de carbone présent dans ledit produit de la réaction de reformage.

10. Procédé selon la revendication 9, comprenant en outre la mise sous pression (96) du dioxyde de carbone éliminé au moyen dudit dispositif d'adsorption (60) et sa capture dans un ou plusieurs réservoirs (CO2_T).

11. Procédé selon la revendication 1 ou 2, dans lequel ledit conditionnement thermique du flux mixte et ladite réaction de reformage ont lieu dans un réacteur solaire (10), en particulier dans un conduit récepteur (12) d'un dispositif concentrateur solaire (10).

12. Procédé selon la revendication 1, dans lequel ledit conditionnement thermique du flux mixte a lieu dans un dispositif de préchauffage (HE, TH_F ; BR) avant l'entrée du flux mixte dans un réacteur (10*, 10** - 10***), et où ladite réaction de reformage a lieu dans ledit réacteur (10*, 10** - 10***).
